# EUROPEAN PATENT SPECIFICATION

(11) **EP 0 300 924 B1**
(45) Date of publication and mention of the grant of the patent: **10.03.1993**
(21) Application number: 88401924.1
(22) Date of filing: 22.07.1988
(51) Int. Cl.: G01N 27/26, B01D 57/02

(54) **Process for conducting electrophoresis and transfer**
Transfer- und Elektrophoreseverfahren
Processus de transfert et d'électrophorèse

(30) Priority: 24.07.1987 US 77240
(43) Date of publication of application: 25.01.1989
(73) Proprietor: ONCOR, INC., Gaithersburg Maryland 20877 (US)
(72) Inventor: Love, Jack D., Wheaton, MD 20906 (US); Elliott, Michael T., Gaithersburg, MD 20878 (US); Morgan, Patricia L., Hyattsville, MD 20781 (US); Woerner, Leo G., Towson, MD 21204 (US)
(74) Representative: Phélip, Bruno

(56) References cited:
- EP-A- 0 236 153
- WO-A-87/02132
- GB-A- 2 089 372
- US-A- 3 764 513
- US-A- 4 657 655

## Description

### Field of the Invention

This invention relates to apparatus for carrying out horizontal gel electrophoresis for separation and subsequent vacuum assisted transportation of macromolecules to a support membrane to facilitate detection.

### Background of the Invention

The process known as electrophoresis involves the migration of charged molecules through a suitable retarding medium under the influence of an electric field. Generally, the compounds of higher molecular weight migrate at a slower rate through the medium than do the compounds of lower molecular weight. Devices have been provided previously for carrying out electrophoresis. An example of such a device is U.S. Patent No. 4,415,418 in which a tray is provided with a raised platform at the center. Removable partitions are placed in the tray at opposite ends of the platform, and a conventional electrophoresis gel is poured over the platform to form a thin layer. When the gel has cooled, the partitions are removed. A comb is provided to form wells across the surface of the gel. Substances that are to be subjected to electrophoresis are delivered into each of the wells, and the tray is at least partially filled with an electrolyte buffer. Electrodes are positioned at each end of the tray and a sufficient voltage difference is applied to the electrodes to cause migration of the molecules of the substance in the wells across the length of the gel, separated according to their molecular weight. After electrophoresis, the gel is removed from the original casting tray, and placed in a dish containing depurination solution. Approximately thirty minutes later this solution is poured out by tipping the dish toward one edge while the gel is held with the fingers. It is important to use great care during this procedure to prevent the gel from breaking because there is no gel support structure and subsequent processing is possible only with an integral gel. A denaturation solution is then added to the dish and incubation is continued for approximately thirty minutes. Again, the solution is carefully poured off. Then neutralization buffer is added and incubation is continued for thirty additional minutes.

In accordance with conventional techniques, transfer of the nucleic acids is accomplished by placing a piece of filter paper, which is as wide as and longer than the gel, on a platform which is suspended above a solution of 10X saturated saline citrate buffer (SSC). The ends of the filter paper are long enough to hang off the ends of the platform and dip into the 10X SSC. Thus, the filter paper acts as a wick to absorb the SSC solution. The gel is removed from the dish and placed on top of the filter paper saturated with 10X SSC. Next, a piece of membrane filter paper which is the same size as the gel is saturated with 10X SSC and placed on top of the gel. The nucleic acids are eventually bound to the membrane filter paper. Another piece of saturated filter paper, the same size as the gel, is placed on top of the membrane. The entire layered unit is then smoothed to remove any air bubbles that may exist between the gel and the filter paper. Finally, a stack of paper towels, the same size as the gel, is positioned on top of the layered unit.

Over a period of about 12 to 16 hours, the 1Ox SSC solution is drawn up through the gel by capillary action and the nucleic acids are transferred out of the gel into the membrane above. The paper towels absorb the excess buffer and provide the force for capillary action. At the end of the transfer period, the entire layered unit is disassembled and the membrane is removed for hybridization. This technique is described in an article by E. Southern, "Detection of Specific Sequences Among DNA Fragments Separated by Gel Electrophoresis," J. Mol. Biol., 98:503 (1975).

Although the trays such as the one described in U.S. Patent No. 4,415,418 are convenient for carrying out electrophoresis, they are not suitable for situations where a large number of samples must be tested in a relatively short period of time.

Therefore, the prior art uses a tedious multi-step, multi-apparatus process for preparing nucleic acid fragments for subsequent hybridization. Four steps are generally undertaken to achieve preparation of the sample for hybridization. Electrophoresis was previously described. Depurination removes purine bases from nucleic acids. Denaturation involves separating the strands of nucleic acids and breaks down the depurinated nucleic acids into suitable size to allow eventual transfer of the fragments out of the gel. Transfer involves allowing the fragments to go out of the gel onto the porous membrane.

WO-87/02132 relates to an electrophoresis and vacuum transfer apparatus comprising a body with filter means and vacuum means. The liquids are poured through the opening in the top of the cover and no passage for introducing or removing liquids from the device is provided.

US-3,764,513 relates to an electrophoresis chamber in which the gel layer is exposed to the electroconductive liquid by means of a wick through the fibrous material.

GB-2 089 372 relates to a thermostatic plate that is transparent so that the gel may be illuminated.

US-4,657,655 relates to an apparatus with an electrophoresis tray and fluorescent lamps to illuminate the gel on the support tray, after it has been removed from the housing.

### Objects of the Invention

It Is the principal object of the present invention to provide an apparatus wherein the steps of electrophoresis depurination, denaturation and transfer to a membrane may all be carried out.

It is an object of the present invention to standardize and simplify the electrophoresis and transfer techniques to facilitate applications of molecular biology.

It is a further object of the present invention to provide a device for electrophoresis and transfer which offers considerable time and cost savings.

Yet another object of the present invention is to provide an electrophoretic system wherein a uniform flow rate of buffer solution above and below the gel surface is maintained, even at low flow rates.

Still another object of the present invention is to provide a more efficient device for handling the gel and further processing.

Another object of the present invention is to provide an electrophoretic system including a photoadapter which permits ultraviolet light to be directed onto a membrane and which permits photographs to be taken of the membrane.

### Summary of the Invention

In accordance with the present invention, nucleic acid fragments such as DNA and RNA may be prepared for subsequent hybridization using the apparatus of this invention. The apparatus is particularly useful for detection of gene rearrangements, restriction fragment polymorphisms and restriction fragment patterns. The apparatus enables rapid screening of nucleic acids from tissue specimens and body fluids for the presence of infectious viruses such as Human Papilloma virus, for typing B-cell and T-cell monoclonal populations, and for screening patients for the development of cancer or other disease states.

The apparatus of the present invention permits electrophoresis and transfer to be conducted in a single unit.

The unit includes a tray having opposite side walls, opposite end walls, a bottom wall, a central platform in the tray, a vacuum chamber between the platform and the bottom wall and a platform surface which is pervious to liquid. An electrode for applying an electric field is provided in the tray adjacent the end walls. The platform is located between the electrodes. There is also a conduit for transferring liquid into and out of the tray. The conduit has a port of a size large enough to prevent formation of bubbles in the liquid. There is a dam which extends between opposite side walls of the tray at each end of the platform. The dam has a slot along the bottom wall of the tray. The tray may be covered by a lid. The unit is adapted to perform electrophoresis and transfer without removing the gel from the tray.

The present invention relates thus to an apparatus for use in conducting electrophoresis and subsequent transfer of cell fragments comprising:
a tray having opposite side walls and opposite end walls and a bottom wall ;
a support surface extending over a portion of the bottom wall, the support surface being pervious to liquid and being spaced from the bottom wall to form a chamber in the space between the bottom wall and the support surface;
a dam at each end of the tray adjacent the end walls each dam having a transverse slot ;
electrodes extending along each dam on the side that is adjacent the support surface ;
a first fluid passage between the exterior of the tray and the chamber, and second fluid passages for conducting fluid into and out of the tray between the dams and the end walls whereby the transverse slot and the second fluid passages are arranged such that the flow of fluid across the support surface is less turbulent and the electrical field generated in the tray by the electrodes is more uniform, and the chamber and the first fluid passage are arranged such that transfer is performed by applying a vacuum in the chamber through the first fluid passage .

Moreover, in the apparatus of the present invention :
- the electrodes extend longitudinally of the dam and are equally spaced apart from each other ;
- the transverse slot of each dam is adjacent the bottom wall of the tray ;
- it is provided a table adapted to be supported on the support surface for supporting a gel during electrophoresis ;
- the table is constructed of a material that transmits ultraviolet light ;
- the apparatus includes a heat sink plate adapted to be placed over a gel in the tray to facilitate uniform heat distribution during the electrophoresis step ;
- the heat sink plate has a slot for access to sample wells in the underlying gel ;
- the apparatus includes housing adapted to be mounted on the side walls and end walls of the tray, the housing further including an ultraviolet light source for causing fluorescence of a sample in the tray ;
- the apparatus includes a camera mounted on the housing for photographing a sample in the tray.

### Detailed Description of the Drawings;

Fig. 1 is a top plan view of the electrophoresis transfer tray of a first embodiment not in accordance with this invention, with the lid removed;
Fig. 2 is a side elevational view of the cartridge, partially in cross-section;
Fig. 3 is a detail top plan view of the tray with the perforated plate removed;
Fig. 4 is a cross-sectional view of the tray along the line 4-4 in Fig. 3;
Fig. 5 is a detail view of the plate during the vacuum step showing the membrane and gel superimposed on the plate;
Fig. 6 is a top plan view of the lid for the cartridge;
Fig. 7 is a cross-sectional view of the lid along the line 7-7 in Fig. 6;
Fig. 8 is a cross-sectional view of the lid along the line 8-8 in Fig. 6;
Fig. 9 is a detail plan view of the tray with the bridge installed;
Fig. 10 is a front elevational view of the tray with the bridge installed as in Fig. 9;
Fig. 11 is a cross-sectional view of the bridge and tray along the line 11-11 in Fig. 9;
Fig. 12 is a top view of the tray as in Fig. 1 but showing the embodiment of the invention;
Fig. 13 is a cross-sectional view of the tray along the line 13-13 in Fig. 12;
Fig. 14 is a perspective detail view of the tray of Fig. 12 showing the dam;
Fig. 15 is a cross-sectional view of the dam taken along the line 15-15 in Fig. 12;
Fig. 16 is a cross-sectional view of the tray as in Fig. 15, but showing a modified form of the dam;
Fig. 17 is a front elevational view of the tray and hood which supports a camera and ultraviolet light sources;
Fig. 18 is a side elevational view of the tray and hood as in Fig. 17;
Fig. 19 is a cross-sectional view of the connection between the bottom member of the opaque chamber and the side of the tray taken along the line 19-19 in Fig. 18;
Fig. 20 is a perspective view of a table which can be placed on the support surface of the tray; and
Fig. 21 is a perspective view of a heat sink plate which can be placed on the gel surface.

### Detailed Description

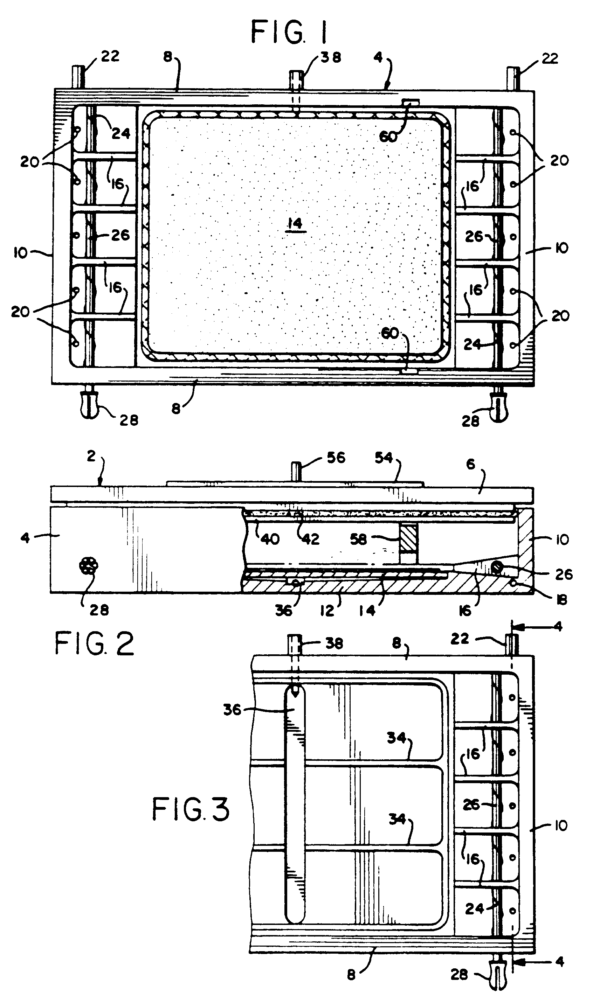

Referring to Figs. 1 and 2, a cartridge 2 is used for carrying out the electrophoresis and transfer processes. The cartridge 2 includes a tray 4 and a lid 6. Tray 4 is preferably composed of polyvinyl chloride or Delrin, a resin which is a registered trademark of E. I. duPont de Nemours & Co. Inc.; however, any material which has good dimensional stability for fabrication is non-electrically conductive and which is chemically compatible with the intended use is suitable. The tray 4 has opposite side walls 8, end walls 10 and a bottom wall 12. A support surface 14 is provided at the center of the tray. The bottom wall 12 adjacent the end walls 10 slopes downwardly, as shown in Fig. 2 away from the support surface 14. A plurality of webs 16 extend inwardly from the end walls 10. The webs facilitate insertion of the gel without tearing. The webs also align the gel thereby assuring proper orientation of the gel in the electric field.

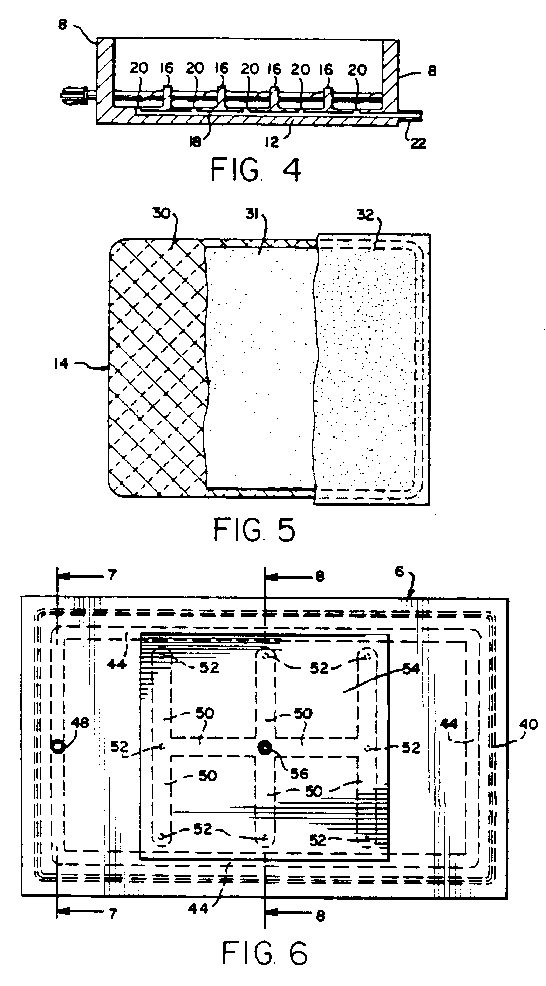

As shown in Figs. 2 and 4, a transverse passage 18 is provided in the bottom wall 12 and ports 20 communicate with the passage 18 to allow the circulation of fluid into and out of the tray. A tubing fitting 22 is provided on the side wall 8. An identical passage 18 is provided at the opposite end of the tray (Fig. 1) and has corresponding ports 20 and a tube fitting 22.

Electrodes are provided at each end of the tray. The electrode 24 is in the form of a thin wire, preferably of platinum, which is wrapped on an insulated rod 26. The rod is supported in aligned holes in the webs 16. The electrode 24 extends through the side wall 8 and is connected with an electrical contact element 28 which is adapted to be connected to a source of electric potential.

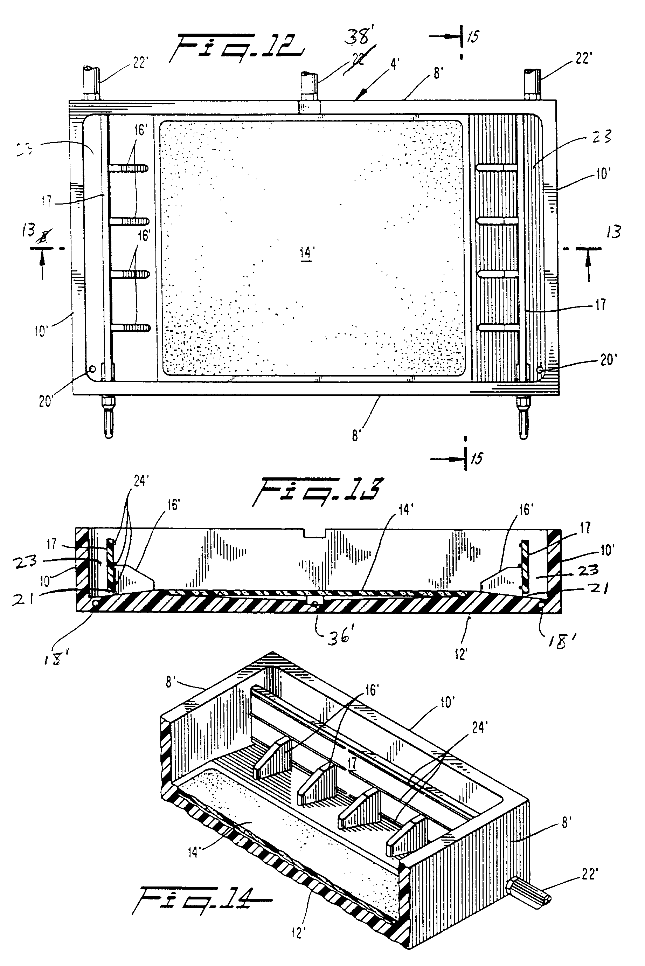

The support surface 14 is formed of a porous plate 30 (Fig. 11). Any porous plate is suitable, however, a plate made of a porous polyethylene is preferred. The porous plate should be about 30% to 85% open to sufficiently pull water. As shown in Fig. 5, the plate 30 has parallel score lines on each side which are perpendicular, so that small holes through the plate are formed at the inner section of the score lines. Of course, any suitable porous plate could be substituted for the plate 30. A porous membrane 31 has approximately the same dimensions as the plate 30, so that when it is in place, it substantially covers the plate 30. Membrane 31 must have properties such that it is optimum for binding of vacuum assisted transported DNA fragments. Membrane 31 is preferably comprised of nylon or nitrocellulose such as a nylon membrane comprised of about 02. to 1.2 micron porosity. However, any fluid-permeable membrane which is sufficient to bind nucleic acids would be suitable.

A gel is cast on a separate tray as in conventional practice. The gel can be agarose, polyacrylamide, mixed agarose/polyacrylamide or any other material suitable for the separation of macromolecules in an electric field. Generally, 0.7% w/v agarose is used. The gel 32 is then transferred to the tray 4 where it is superimposed on the plate 30, as shown in Fig. 2. A vacuum chamber is provided beneath the plate 30, as shown in Figs. 2 and 3. The chamber includes a pair of ridges 34 extending outwardly from a central channel 36. A tubing fitting 38 extends through the side wall 8 and communicates with the channel 36. The fitting 38 is adapted to be connected by tubing to a suitable vacuum pump. The opposite ends of the gel 32, when placed in the tray 4, abut the ends of the webs 16, as shown in Fig. 11. The side edges of the gel 32 are positioned by engagement with the side walls 8 of the tray.

As shown in Fig. 6, the lid 6 has a shoulder 40 which extends around the perimeter of the lid and engages the inside surface of the side walls 8 and the end walls 10. A sealing gasket 42 is retained within a groove in the shoulder 40. The gasket 42 prevents the leakage of fluid from the interior of the cartridge. A gas bubble channel 44 is formed in the interior of the lid 6 and extends along the end walls and side walls of the tray. The channel portion at the right side of Fig. 6 is more shallow than the groove at the left side of Fig. 6, and the grooves extending along the side walls 8 progressively increase in depth from the right end to the left end as viewed in Fig. 6. This arrangement of the grooves causes the gas bubbles to migrate progressively toward an outlet port 46 through the lid 6. The outlet port has a tube fitting 48 through which the gas bubbles can escape.

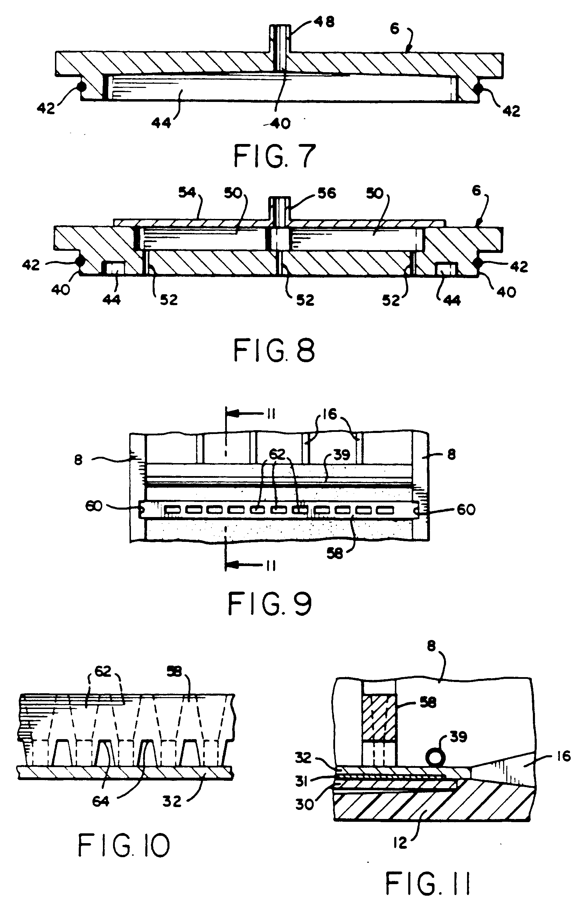

The central portion of the lid 6 has a plurality of grooves 50 formed in the top side of the lid. As shown in Figs. 6 and 8, ports 52 extend from the bottom of the grooves to the lower surface of the lid so that fluid can pass from the grooves 50 into the interior of the cartridge when the lid is in place. A cover plate 54 encloses the grooves 50 and a tube fitting 56 allows liquid to be conducted through the plate 54 into the interior of the grooves 50.

In order to enable samples to be delivered into the wells formed in the gel layer 32, a bridge 58 is provided. The bridge aids in directing the operator to the correct well for sample filling thus making it easier to fill the well. The bridge is received in vertical slots 60 in each of the side walls 80 at a position that is aligned with the wells that are molded in the gel layer. A black strip may be positioned near the wells to aid in visualizing the wells during sample loading. The bridge 58 includes funnel-shaped passages 62 in a shape to receive the tip of a pipette for delivering the samples into the wells formed in the gel. As shown in Fig. 10, arches 64 are formed in the bridge between the passages 62 to allow fluid circulation between opposite sides of the bridge. If additional recirculation is necessary, the bridge can be removed prior to electrophoresis.

In operation, a gel layer is formed in accordance with conventional practices of a proper size and shape to fit within the tray 4, so that the ends abut the ends of the webs 16 and the sides of the gel fit between the side walls 8 of the tray. Preferably, the gel is cast in a separate tray and has a series of wells molded in the gel layer adjacent one end. The gel 32 is then removed from the casting tray and placed on the porous plate 30, so that the gel 32 occupies the position shown in Figures 2, 9 and 11. The sloping top edge of each web 16 aids in guiding the gel into position in the tray 4. A source of electric potential is connected with the electrical connectors 28 and a system for circulating fluid is connected with the tubing fittings 22. An electrophoresis buffer is added to the tray to a depth that fully covers the electrodes 24 and the gel. The bridge 58 is installed in the slots 60 after the gel layer is positioned on the support surface 14. The samples are then delivered into the passages 62 from which they pass into the individual wells. The bridge remains in place when the lid 6 is applied. The electrophoresis buffer is recirculated through the passages 18 by the use of a conventional pump, to provide a fluid current passing over the gel. At the end of electrophoresis, the electrophoresis buffer is then withdrawn from the tray and a depurination buffer is pumped into the tray. After a predetermined period of time, the depurination buffer is then pumped out of the tray and a denaturation buffer is pumped into the tray. The gel tends to float in the denaturation buffer, and before the vacuum is applied, the membrane 31 is inserted manually into the space between the gel and the plate 30, as shown in Figs 5 and 11. The gel is then lightly pressed against the membrane and held in place by approximate means, such as a band or tube 39, as shown in Figs. 9 and 11. After a suitable elapse of time, the denaturization buffer is withdrawn through the vacuum fitting 38 at a relatively slow rate, which transfers the displaced samples from the gel onto the permeable membrane 31. As an alternative, water, or denaturation liquid may be sprayed onto the surface of the gel through the tube fitting 56 as the liquid is being withdrawn through the tube fitting 38. The lid 6 is then removed and the permeable membrane 31 may be removed from the tray for further processing. The membrane now contains the displaced samples in preparation for hybridization.

The cartridge has the important advantage that it allows electrophoresis and transfer to occur without having to remove the gel from the tray. At the completion of the operation, the nylon membrane bearing the samples can readily be removed for subsequent treatment.

The electrophoresis apparatus is designed to accommodate either a large number of analytical samples or milligram quantities of fragments for preparative runs. Typically, the number of samples which may be introduced into the cartridge may range from about 5 to 15. Generally, 10 samples plus two controls have been found to be suitable.

The tray 4 and the lid 6 must be compatible with standard electrophoresis and nucleic acid transfer reagents. Typical reagents include up to 3 molar (M) salts, acetic acid, 1 M hydrochloric acid and 0.5 M sodium hydroxide. Many polymers could be suitable for the present invention. Furthermore, in view of the direct current being used during electrophoresis, the tray 4 and lid 6 should not conduct electricity. The lid 6 is preferably plexiglass (acrylic) since a further advantage is obtained with the use of a clear cover since it would allow visual tracking of optional dyes during electrophoresis.

Using one buffer or solution throughout the foregoing procedure is more efficient and economical than using a different buffer or solution during each of the electrophoresis, depurination, denaturation and transfer stages. Alternatively, four separate solutions may be used.

For example, during electrophoresis any buffer well-known in the art is suitable such as any solution of a weak acid or base and its salts, such as acetates, borates, phosphates and phthalates, which behave as buffers. Typical compounds used in preparing buffers include acetic acid, phenylacetic acid, sodium acetate, ethylene diamine tetraacetic sodium hydroxide, sodium chloride and the like. During electrophoresis, a buffer comprised of 40 mM tris-acetate, pH 8, 12 mM sodium acetate and 2 mM EDTA, pH 8, is preferred.

During depurination, any solution which chemically assists in depurination or depyrimidination would be useful. These solutions are well-known in the art. A buffer comprised of 0.25 M hydrochloric acid can be used. It was discovered that during depurination, it is important to expose the lower surface of the gel as well as the top and side surfaces to the solution. For this reason, the membrane 31 is not inserted between the gel and the platform until just before applying the vacuum under the porous plate 30 to transfer the cells to the membrane.

During denaturation, any solution which assists in breaking the hydrogen bonds between the nucleic acid strands is suitable. These solutions are also well-known in the art. For example water and heat may provide satisfactory results, also formamide or any alkali such as sodium hydroxide or potassium hydroxide.

A solution of 0.5 M sodium hydroxide is preferred.

As the transfer solution, any solution which allows transfer and binding of the nucleic acid strands to the membrane would be suitable. These solutions are also well-known in the art. Advantageously, the transfer solution is preferably 0.5 M sodium hydroxide, the same as the denaturation solution.

The time periods used in each of the above-described stages may vary over a wide range depending on the processing conditions. For instance, each of electrophoresis, denaturation and depurination may require from about 10 minutes to 5 hours. Useful techniques to decrease the amount of time required for processing include increasing the voltage, using larger ports, selecting the optimum thickness of the gel, different sizes of membranes and the support plate, and the like. A particular advantage of the present process is that the time required for electrophoresis is approximately 40 - 65% of the typical time required for electrophoresis using prior art apparatus and techniques. A significant time savings is offered because of the circulation of fluids, i.e., buffers, through the electrophoresis transfer cartridge, thereby allowing a constant pH and temperature to be maintained during the process. In addition, the geometry of the cartridge results in concentrating the electric field within the gel which also speeds the process.

Furthermore, by maintaining a relatively frequent circulation of the buffer, a smaller volume of buffer is suitable in contrast to the buffer requirements of prior art electrophoresis processes.

The transfer step may require from about 10 minutes to two hours. Generally, about 60 minutes produces adequate results. This step also offers a considerable time savings over prior art transfer techniques. Capillary transfer, for instance, requires about 12 hours, squash blot transfer requires about 3 hours and standard electrotransfer requires about four hours.

A further advantage is the time and labor savings that results since the apparatus is a cartridge. The decrease in the number of mechanical steps to be performed by a technician or operator assists in maintaining the accuracy of the procedure since a decrease in the number of necessary steps to be performed also minimizes error.

Other components are useful to achieve the objects in addition to the above-described electrophoresis transfer cartridge. For instance, a microprocessor controller may be used to automate electrophoresis and DNA/RNA transfer. Such a controller would control the voltage and time for electrophoresis, the valves for reagents, the pumps to add and remove reagents and the vacuum system for DNA transfer. The electrophoresis transfer cartridge may be connected to a variety of standard laboratory equipment including peristaltic pumps.

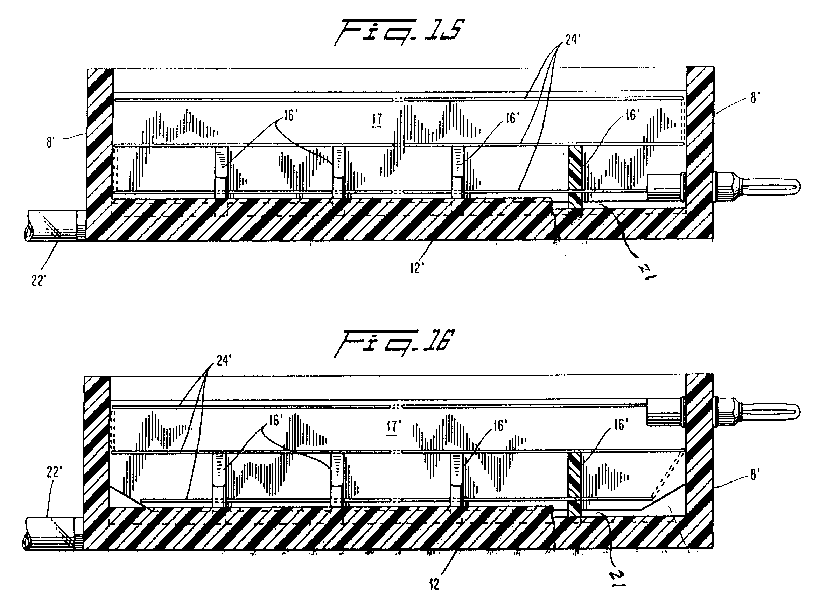

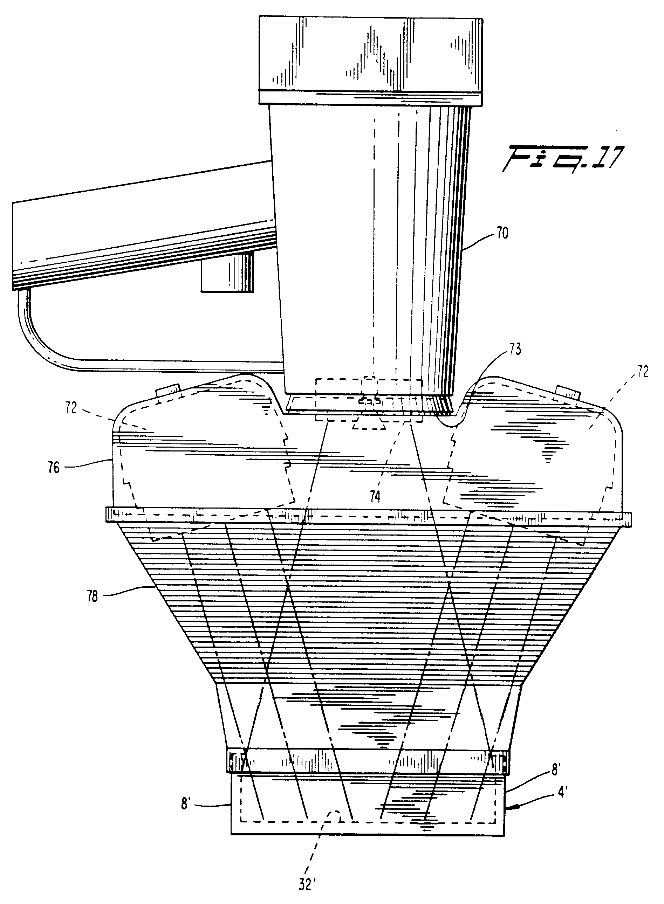

The embodiment of the invention is illustrated in Figs. 12-21. Instead of the plurality of ports 20 (Fig. 1) communicating with the passage 18 to allow the circulation of fluid into and out of the tray, the modified tray 4' as shown in Fig. 12, has a single port 20' at each end of the tray. Each port 20' has a diameter greater than that of each of the individual ports 20 of the first embodiment as shown in Fig. 1. A dam 17 is mounted at each end of the tray 4'. The dams 17 extend between the opposing side walls 8'. A plurality of webs 16' on the bottom wall 12' provide further support for the dam. Both of the dams have a transverse slot 21 (Figs. 13 and 15) which extends substantially the full length of the dam.

The use of a single relatively large port 20' in combination with a dam 17 and slot 21 ensures uniform flow of liquid across the gel in electrophoretic systems where the liquid flow rate is typically small. The webs 16' also assist in avoiding lateral currents while the liquid is flowing. In the systems of Fig. 1, the liquid must be supplied at a relatively high pressure through the fitting 22 in order to obtain a uniform flow of liquid through each of the ports 20. At the low pressures associated with electrophoresis, therefore, there can result a higher flow rate of liquid across one portion of the gel than across another portion of the gel. In severe cases, this could affect the migration of the samples during electrophoresis, lead to overheating of the gel and disruption of the pH levels at those areas of the gel where the flow of buffer is insufficient.

The presence of a single larger port and a dam provides a uniform flow of material even with low pressure flows. The dam 17 forms a chamber 23 at both ends of the tray 4'. In these chambers, the turbulence or velocity pressures generated by the inflow and outflow of fluid is dissipated, and only a very minute head differential between the opposite sides of the dam 17 causes flow through the horizontal slot. The slot 20' can be either at the bottom of the chamber 23 as shown in Fig. 12, or part way up, but it must be entirely covered by the liquid surface. Turbulence in the end chambers is minimized by having the input and output supply systems as large as possible and by directing the input flow upward where the energy can be dissipated as waves on the surface. If the process fluid is suitable, open cell foam structures can be inserted in the chambers 23 to further dampen turbulence.

Another advantage of using a single larger port and a dam as opposed to a plurality of small ports to distribute a buffer liquid relates to the formation of air bubbles. More specifically, as buffer passes through the ports 20 into the tray, air bubbles can be carried along with the buffer. These air bubbles can collect until enough pressure builds up within the system so as to disrupt the flow of additional buffers into the tray. This problem may be so severe that it is necessary to incorporate specialized control systems within electrophoretic circulating equipment to effect removal of the entrained air and resumption of the buffer circulation. Due to changes in the physical chemistry of a fluid flowing through a single large port as opposed to a plurality of smaller ports, the present system eliminates bubble formation within the tray and thus concomitantly eliminates the need for special control equipment. The use of a larger buffer fluid port is also advantageous in that it enables particles carried by the circulating fluid to pass through easily.

If it is desired to have other than uniform flow across the width of the gel, the slot can be modified to accomplish the desired objective and the adjustments are not unduly sensitive. For example, if it were desired to have a greater flow along the two outer edges in order to accomplish additional cooling, the slots could be widened at the edges as shown in Fig. 16.

The ports should be of size large enough to avoid bubble formation in the circulating fluid. It has been found that a hole size of 3 to 5 mm is satisfactory for this purpose. Although the port is shown near the side wall 8'of the device, it may be placed at any mechanically feasible location behind the dam 17. The horizontal slot formed by the dam and the bottom of the tray should be of a size large enough to permit passage of insoluble materials and small enough to generate uniform flow. For example, the slot may be between 1 and 5 mm in height.

As illustrated in Figs. 14 and 15, three electrodes 24' are advantageously mounted on the surface of the dam 17 facing the gel. The mounting may be achieved simply by gluing the electrodes to the dam. Although a single electrode or two electrodes may be used, it has been found that three electrodes generate a more uniform electric field. More specifically, the thin wires typically employed in electrophoretic devices tend to vary in diameter thereby generating an electric field of varying intensity. By employing three such electrodes, variations in the diameter of each individual electrode tend to average out.

In operation, as described previously with respect to the first embodiment of figures 1-11, the gel is placed in the tray 4' on the support surface 14' and an electrophoresis buffer is added to the tray to a depth that fully covers the electrodes 24' and the gel. The samples are then placed in the individual wells in the gel and circulation of the electrophoresis buffer is started. The buffer flows into the chamber 23 at one end of the tray through the tubing 22' at a predetermined rate which corresponds approximately to the flow rate desired for the buffer. The buffer flows out of the chamber 23 through the slot 21 in the dam 17 in the direction toward the opposite end of the tray. The buffer enters the chamber 23 at the opposite end through the slot 21 and then flows out through the exit tubing 22'. This arrangement permits a very low flow rate, if desired. The remaining operation is essentially the same as previously described for the embodiment of Fig. 1.

As illustrated in Fig. 20 the tray 4' may also be provided with a table 92 having four legs 94 for handling the gel and to improve the flow pattern of the buffer. The table should be constructed of a material which transmits ultraviolet light and should be of a size sufficient to hold the gel layer. The legs of the table are high enough so as to allow passage of buffer, including entrained particles, beneath the bottom surface of the table. The legs are also low enough so as to ensure that the gel layer resting on the table does not project above the surface of the buffer. Preferably, the table is 3 to 5 mm thick and is raised 2 to 4 mm above the support surface 14' of the tray. When using the table, the agarose gel layer is placed on the top surface of the table and the table 92 is placed in the tray on the support surface 14'. By virtue of the table, buffer circulates both above and below the tray during electrophoresis thereby increasing the efficiency of the heat exchange between the buffer and the gel. Once electrophoresis is completed, the table with the gel can simply be lifted from the tray. Although such a step is not required according to the preferred embodiment, wherein the subsequent depurination and denaturation are carried out within the tray, the easily removable table does render it easier to process the gel in systems wherein the gel has to be removed from the tray.

In order to further facilitate uniform heat distribution throughout the gel, there may also be provided a heat sink plate 96, illustrated in Fig. 21, made of a material such as plexiglass. Like the table 92, the heat sink plate 96 is dimensioned to correspond with the dimensions of the gel layer. The heat sink is advantageously 3 to 5 thick and is provided with a slot 98 along one of the ends thereof to correspond to the wells in the gel. In operation, the heat sink plate 96 is placed on the gel for the electrophoresis step. Because the gel tends to float during electrophoresis, the heat sink plate 96 does not interfere with the flow of buffer above the gel surface.

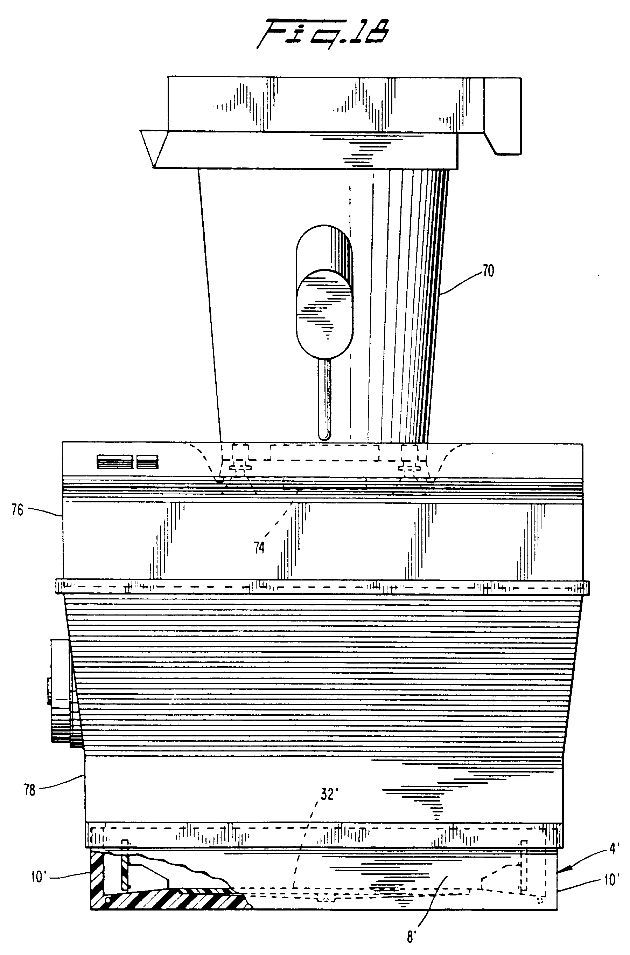

According to the embodiment of this invention, an arrangement is also provided for exposing the sample on the gel to ultraviolet light. Ultraviolet light can be used in combination with ethidium bromide to both nick the DNA strand and to facilitate photography of the fluorescent DNA bonds. The apparatus for exposing the tray to ultraviolet light is illustrated at Figs. 17 and 18. The apparatus includes a camera 70 having a lens 74. The front of the camera 73 including the lens 74 is connected to a two-piece opaque housing including a top member 76 and a bottom member 78. The top member 76 houses a pair of ultraviolet lamps 72 on either side of the lens 74. The lamps 74 are at an angle relative to the front of the camera 73 so that ultraviolet rays will be directed onto the gel 32'. The bottom member 78 connects the top member 76 with the tray at the opposing side walls 8' and end walls 10' of the tray 4'.

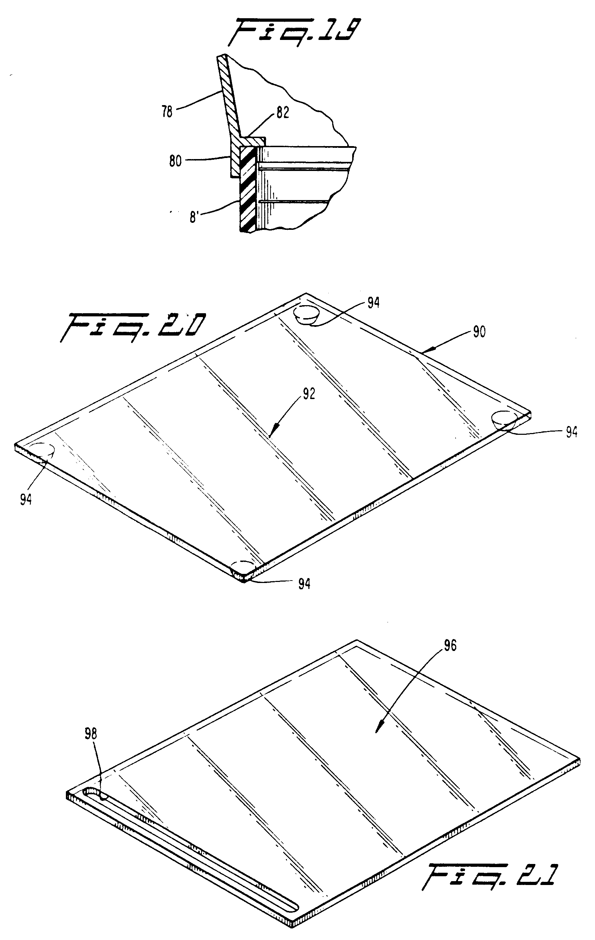

As illustrated in Fig. 19, a light-tight connection between the bottom member 78 and the end wall of the tray 8' is achieved by a continuous flange 82 resting on and overlapping the top edge of the side walls 8' and end walls 10' and by a continuous collar 80 extending along the upper portion of the outside surface of the tray 4'. The flange 82 and the collar 80 fit tightly on the tray, so that light cannot enter the interior of the member 78.

The apparatus for exposing the tray to ultraviolet light can be used in conjunction with ethidium bromide as an alternative to hydrochloric acid for depurination.

More specifically, an electrophoresis buffer containing 0.5 to 1.0 g/ml ethidium bromide or other intercalating dyes which generate strand breaking energy when excited by ultraviolet light may be used. The tray is then exposed to ultraviolet light so as to effect nicking of the DNA strand. Typically, 5 to 15 minutes of exposure to ultraviolet light are required to effect the desired nicking. As is known to persons skilled in the art, the locations of the nicks using the ethidium bromide/ultraviolet light system are somewhat different than the locations of the nicks using HCl. The end result is the same however namely, nicking of the DNA strands so as to enable, after denaturation, transfer of the material.

While this invention has been illustrated and described in accordance with a preferred embodiment, it is recognized that variations and changes may be made therein without departing from the invention as set forth in the claims.

## Claims

1. Apparatus for use in conducting electrophoresis and subsequent transfer of cell fragments comprising:
a tray having opposite side walls (8', 8') and opposite end walls (10', 10') and a bottom wall (12');
a support surface (14') extending over a portion of the bottom wall, the support surface being pervious to liquid and being spaced from the bottom wall to form a chamber in the space between the bottom wall and the support surface;
a dam (17, 17) at each end of the tray adjacent the end walls (10', 10'), each dam having a transverse slot (21, 21);
electrodes (24', 24') extending along each dam on the side that is adjacent the support surface (14');
a first fluid passage (36') between the exterior of the tray and the chamber, and second fluid passages (18', 18') for conducting fluid into and out of the tray between the dams (17, 17) and the end walls (10', 10') whereby the transverse slot (21, 21) and the second fluid passages (18', 18') are arranged such that the flow of fluid across the support surface (14') is less turbulent and the electrical field generated in the tray by the electrodes is more uniform, and the chamber and the first fluid passage (36') are arranged such that transfer is performed by applying a vacuum in the chamber through the first fluid passage (36').

2. The apparatus of claim 1 wherein the electrodes (24', 24') extend longitudinally of the dam and are equally spaced apart from each other.

3. The apparatus of claim 1 wherein the transverse slot (21, 21) of each dam is adjacent the bottom wall (12') of the tray.

4. The apparatus of claim 1 including a table (90) adapted to be supported on the support surface (14') for supporting a gel during electrophoresis.

5. The apparatus of claim 4 wherein the table is constructed of a material that transmits ultraviolet light.

6. The apparatus of claim 1 including a heat sink plate (96) adapted to be placed over a gel in the tray to facilitate uniform heat distribution during the electrophoresis step.

7. The apparatus of claim 6 wherein the heat sink plate has a slot 98 for access to sample wells in the underlying gel.

8. The apparatus of claim 1 including housing (76, 78) adapted to be mounted on the side walls (8', 8') and end walls (10', 10') of the tray, the housing further including an ultraviolet light source (72) for causing fluorescence of a sample in the tray.

9. The apparatus of claim 8 including a camera (70) mounted on the housing (76, 78) for photographing a sample in the tray.

## Patentansprüche

1. Vorrichtung für ein Elektrophoreseverfahren und zum anschließenden Transfer von Zellfragmenten mit
- einer Schale mit gegenüberliegenden Seitenwänden (8',8') und mit gegenüberliegenden Endwänden (10', 10') sowie mit einer Bodenwand (12'),
- mit einer Stützfläche (14'), die sich über einen Teil der Bodenwand erstreckt, die flüssigkeitsdurchlässig ist und die von der Bodenwand beabstandet ist zur Ausbildung einer Kammer in dem Raum zwischen der Bodenwand und der Stützfläche,
- mit einem Damm (17, 17) an jedem Ende der Schale benachbart den Endwänden (10', 10'), wobei jeder Damm einen Querschlitz (21, 21) hat,
- mit Elektroden (24', 24'), die sich längs jedes Damms an derjenigen Seite erstrecken, die der Stützfläche (14') benachbart ist,
- mit einem ersten Mediendurchlaß (36') zwischen dem Äußeren der Schale und der Kammer und mit zweiten Mediendurchlässen (18', 18') zum Leiten eines Mediums in die Schale und aus der Schale zwischen den Dämmen (17,17) und den Endwäden (10',10')wobei der Querschlitz (21,21) und die zweiten Mediendurchlässe (18', 18') so angeordnet sind, daß der Medienstrom durch die Stützfläche (14') weniger turbulent ist und das von den Elektroden in der Schale erzeugte elektrische Feld gleichmäßiger ist, wobei ferner die Kammer und der erste Mediendurchlaß (36') so angeordnet sind, daß der Transfer durch Erzeugen eines Unterdrucks in der Kammer durch den ersten Mediendurchlaß (36') bewirkt wird.

2. Vorrichtung nach Anspruch 1,
**dadurch gekennzeichnet,**
daß sich die Elektroden (24', 24') in Längsrichtung des Damms erstrecken und voneinander gleich entfernt sind.

3. Vorrichtung nach Anspruch 1,
**dadurch gekennzeichnet,**
daß sich der Querschlitz (21, 21) jedes Damms neben der Bodenwand (12') der Schale befindet.

4. Vorrichtung nach Anspruch 1 mit einem Tisch (90), der auf der Stützfläche (14') stehen kann, um bei der Elektrophorese ein Gel zu tragen.

5. Vorrichtung nach Anspruch 4,
**dadurch gekennzeichnet,**
daß der Tisch aus einem Material besteht , das ultraviolettes Licht durchläßt.

6. Vorrichtung nach Anspruch 1 mit einer Wärmesenkplatte (96), die über ein Gel in der Schale angeordnet werden kann, um bei der Elektrophorese eine gleichförmige Wärmeverteilung zu erleichtern.

7. Vorrichtung nach Anspruch 6,
**dadurch gekennzeichnet,**
daß die Wärmesenkplatte einen Schlitz (98) für den Zugang zu Proben in dem darunter befindlichen Gel hat.

8. Vorrichtung nach Anspruch 1 mit einem Gehäuse (76, 78), das an den Seitenwänden (8', 8') und Endwänden (10', 10') der Schale befestigt werden kann, und das eine Lichtquelle (72) für Ultraviolettlicht aufweist, um eine Probe in der Schale fluoreszieren zu lassen.

9. Vorrichtung nach Anspruch 8 mit einer Kamera (70), die am Gehäuse (76, 78) befestigt ist, um eine Probe in der Schale zu fotografieren.

## Revendications

1. Dispositif destiné à être utilisé pour exécuter une électrophorèse et un transfert ultérieur de fragments de cellules, comprenant :
un bac comportant des parois latérales opposées (8',8'), des parois d'extrémité opposées (10',10') et une paroi de fond (12');
une surface de support (14') qui s'étend sur une partie de la paroi de fond, la surface de support étant perméable au liquide et étant distante de la paroi de fond de manière à former une chambre dans l'espace présent entre la paroi de fond et la surface de support;
un trop-plein (17,17) situé à chaque extrémité du bac au voisinage des parois d'extrémité (10',10'), chaque trop-plein possédant une fente transversale (21,21);
des électrodes (24',24') qui s'étendent le long de chaque trop-plein sur le côté qui est contigu à la surface de support (14');
un premier passage de fluide (36') entre l'extérieur du bac et la chambre, et des seconds passages de fluide (18',18') servant à introduire et extraire un fluide dans et hors du bac entre les trop-pleins (17,17) et les parois d'extrémité (10',10'), la fente transversale (21,21) et les seconds passages de fluide (18',18') étant disposés de telle sorte que l'écoulement du fluide au niveau de la surface de support (14') est moins turbulent et que le champ électrique produit dans le bac par les électrodes est plus uniforme, et la chambre et le premier passage de fluide (36') étant disposés de manière que le transfert est exécuté par application d'un vide dans la chambre par l'intermédiaire du premier passage de fluide (36').

2. Dispositif selon la revendication 1, dans lequel les électrodes (24',24') s'étendent dans la direction longitudinale du trop-plein et sont espacées de façon identique les unes des autres.

3. Dispositif selon la revendication 1, dans lequel la fente transversale (21,21) de chaque trop-plein est contiquë à la paroi de fond (12') du bac.

4. Dispositif selon la revendication 1, comprenant une table (90) apte à être supportée par la surface de support (14') de manière à supporter un gel pendant l'électrophorèse.

5. Dispositif selon la revendication 4, dans lequel la table est réalisée en un matériau qui transmet une lumière ultraviolette.

6. Dispositif selon la revendication 1, comprenant une plaque formant puits de chaleur (96) adaptée pour être placée au-dessus d'un gel dans le bac pour faciliter une distribution de chaleur uniforme pendant l'étape d'électrophorèse.

7. Dispositif selon la revendication 6, dans lequel la plaque formant puits de chaleur possède une fente (98) permettant d'accéder aux logements à échantillons dans le gel sous-jacent.

8. Dispositif selon la revendication 1, comprenant un boîtier (76,78) adapté pour être monté sur les parois latérales (8',8') et sur les parois d'extrémité (10',10') du bac, le boîtier comportant, en outre,une source de lumière ultraviolette (72) pour provoquer une fluorescence d'un échantillon dans le bac.

9. Dispositif selon la revendication 8, comprenant un appareil de prise de vues (70) monté sur le boîtier (76,78) pour photographier un échantillon dans le bac.
